# EUROPÄISCHE PATENTSCHRIFT

(11) **EP 2 859 705 B1**
(45) Veröffentlichungstag und Bekanntmachung des Hinweises auf die Patenterteilung: **04.09.2019**
(21) Anmeldenummer: 13733978.4
(22) Anmeldetag: 20.06.2013
(51) Int. Cl.: H04L 29/06, H04W 12/08, H04W 4/00, G05B 19/042, G05B 19/418, H04W 12/04, H04L 29/08

(54) **AUTORISIERUNG EINES NUTZERS DURCH EIN TRAGBARES KOMMUNIKATIONSGERÄT**
AUTHORISING A USER BY MEANS OF A PORTABLE COMMUNICATIONS TERMINAL
AUTORISATION D'UN USAGER PAR UN APPAREIL DE COMMUNICATION PORTABLE

(30) Priorität: 07.08.2012 DE 102012214018
(43) Veröffentlichungstag der Anmeldung: 15.04.2015
(73) Patentinhaber: Siemens Aktiengesellschaft, 80333 München (DE)
(72) Erfinder: FRIES, Steffen, 85598 Baldham (DE); GÜTTINGER, Andreas, 90765 Fürth (DE)
(86) Internationale Anmeldenummer: PCT/EP2013/062884
(87) Internationale Veröffentlichungsnummer: WO 2014/023468

(56) Entgegenhaltungen:
- EP-A1- 2 442 528
- WO-A1-2009/128854
- US-A1- 2007 005 963

## Beschreibung

Die Erfindung betrifft ein Verfahren und ein Zugangskontrollsystem zur Autorisierung eines Nutzers an einem Feldgerät durch ein tragbares Kommunikationsgerät.

Die Anwendung von rollenbasierter Zugriffskontrolle (Rolebased Access Control, RBAC) wird zunehmend von der Telekommunikationsdomäne auf die Automatisierungsdomäne übertragen. Bei einer rollenbasierten Zugriffskontrolle wird die Möglichkeit ausgenutzt, mehrere Instanzen, insbesondere reale Nutzer einer Kategorie, das heißt einer Rolle, zuzuordnen. Einer gemeinsamen Rolle zugeordneten Instanzen werden dabei gemeinsame Funktionen und Rechte zugeordnet. Dadurch vereinfacht sich mithilfe rollenbasierter Zugriffskontrolle die Administration von Rechten beispielsweise auf einzelnen Feldgeräten einer Anlage, da hier beispielsweise im Falle eines realen Nutzers dieser nicht mehr mit seinen Rechten administriert werden muss, sondern sich mit einer Rolleninformation und dazugehörigem Berechtigungsnachweis am Feldgerät authentisiert und entsprechend seiner Rolle Aktionen ausführen darf. Das Feldgerät realisiert dabei nur noch die Zuordnung von Rollen zu Rechten.

Um den zu einer Rolle gehörigen Berechtigungsnachweis einem Gerät zur Verfügung zu stellen, existieren bisher Ansätze wie die Verwendung von USB-Sticks oder Smartcards oder die Verbindung zu einer nachgelagerten Infrastruktur. Für ein Authentisierungsverfahren, das USB-Sticks, Smartcards oder ähnliche Hilfsmittel zur Authentifizierung verwendet, sind jeweils physikalische Schnittstellen nötig. Es ist nötig, eine Verbindung zwischen dem Hilfsmittel und dem Feldgerät herzustellen, zum Beispiel indem eine Smartcard eingesteckt wird. Darauf folgt in der Regel das Freischalten mittels eines zugehörigen Passwortes.

Daraus ergibt sich unter anderem die Problematik, dass Feldgeräte, gerade wenn sie älteren Baujahres sind, das oben beschriebene Verfahren nicht unterstützen oder nicht über eine entsprechende Schnittstelle verfügen. Außerdem muss von der zu autorisierenden Person das Hilfsmittel immer mitgeführt werden, also beispielsweise immer ein USB-Stick bereitgestellt werden für die Anmeldung an einem Gerät.

Aus Patentveröffentlichung DE 10 2007 046 079 A1 ist bekannt, Einmalpasswörter im Automatisierungsumfeld für den Fernwartungszugang zu benutzen.

Aus der WO 2009/128854 A1 ist ein Verfahren und eine Vorrichtung zur Zugangskontrolle zu Sicherheitseinrichtungen bekannt, bei dem ein spezielles an der Sicherheitseinrichtung angebrachtes Merkmal mit einem tragbaren Kommunikationsgerät abfotografiert wird und zusammen mit einem nutzerspezifischen Authentisierungsfaktor, beispielsweise der Telefonnummer oder der Seriennummer des Kommunikationsgerätes, an einen Server übermittelt, dort analysiert und ein Zugangscode an das Kommunikationsgerät zurückgeschickt wird. Der Zugangscode muss dann vom Kommunikationsgerät in beispielsweise eine Tastatur an der Sicherheitseinrichtung übertragen werden.

Die Druckschrift EP 2 442 528 A1 offenbart ein Verfahren und ein System zur Authentisierung von Geräten beispielsweise einer Industrieautomatisierungsanlage durch den Austausch von Sicherheitstoken, die zwischen einem Nutzer und einem beispielsweise Feldgerät ausgetauscht werden.

Die US2007/0005963 A1 offenbart ein Verfahren zur Autorisierung eines Zugangs eines zweiten Rechengerätes auf ein erstes Rechengerät einer vernetzten Rechenumgebung, die mehreren erste Rechengeräte umfasst. Dazu wird auf Anforderung ein sicherer einmal verwendeter Code (Nonce) erzeugt, mit der im ersten Rechengerät mittels einer vorkonfigurierten Kennung für das zweite Gerät, ein Lokaler-Zugangscode und im zweiten Rechengerät ein Remote-Zugangscodes ermittelt wird. Stimmen der Lokale-Zugangscode und der Remote-Zugangscode überein, wird der Zugang erlaubt.

Vor diesem Hintergrund besteht die Aufgabe der vorliegenden Erfindung darin, ein Verfahren und eine Zugangskontrolleinrichtung bereitzustellen, die einen vereinfachten zentral verwalteten und gegen Manipulation optimierten Zugriff auf ein Feldgerät ermöglichen.

Diese Aufgabe wird durch ein Verfahren und eine Zugangskontrolleinrichtung gemäß den in den unabhängigen Ansprüchen angegebenen Merkmalen gelöst. Vorteilhafte Ausgestaltungen sind in den Unteransprüchen angegeben.

Erfindungsgemäß weist ein Verfahren zur Autorisierung eines Nutzers durch ein tragbares Kommunikationsgerät an einem Feldgerät folgende Schritte auf:
Durch das tragbare Kommunikationsgerät werden erste Informationen zur Identifizierung des Feldgerätes erfasst. Von dem tragbaren Kommunikationsgerät werden die ersten Informationen und zweite Informationen zur Identifizierung des tragbaren Kommunikationsgerätes oder seines Nutzers zu einem System gesendet. Das System ermittelt eine erste Zugangsinformation in Abhängigkeit von den ersten Informationen und den zweiten Informationen und sendet die ersten Informationen an das tragbare Kommunikationsgerät. Das tragbare Kommunikationsgerät überträgt die zweiten Informationen und die erste Zugangsinformation zu dem Feldgerät. Das Feldgerät ermittelt eine zweite Zugangsinformation in Abhängigkeit von den zweiten Informationen und gleicht die erste Zugangsinformation mit der zweiten Zugangsinformation ab. Falls die erste Zugangsinformation und die zweite Zugangsinformation übereinstimmen, wird ein Zugang zu dem Feldgerät gewährt.

Als erste Informationen und zweite Informationen werden in der vorliegenden Patentanmeldung kennzeichnende Angaben verstanden, wie beispielsweise Seriennummern eines Feldgerätes oder Rolleninformationen eines Nutzers. Sie identifizieren somit die miteinander kommunizierenden Elemente eines Systems, zum Beispiel die Feldgeräte einer Automatisierungsanlage untereinander, oder mit einem Server oder mit tragbaren Kommunikationsgeräten wie Tablet-PCs oder Smartphones, welche zu Wartungszwecken eingesetzt werden.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausgestaltungen erzielt werden.

Ein tragbares Kommunikationsgerät, wie insbesondere ein Mobiltelefon oder ein Smartphone, gehört für im Umfeld von Automatisierungsanlagen tätige Personen, wie zum Beispiel für Servicetechniker, zur üblichen Ausstattung. Somit stellt das Verfahren zur Autorisierung eines Nutzers mithilfe eines tragbaren Kommunikationsgerätes ein vereinfachtes Verfahren für eine rollenbasierte Zugriffskontrolle dar, die die Vorteile der mobilen Kommunikationstechnik ausnutzt.

In einer vorteilhaften Ausgestaltung umfasst das Verfahren folgende Schritte:
Der Nutzer fotografiert mit dem tragbaren Kommunikationsgerät, insbesondere einem Mobiltelefon mit eingebauter Kamera, zum Erfassen der ersten Informationen einen Code, insbesondere einen eindimensionalen Barcode oder zweidimensionalen Quick Response Code (kurz QR-Code). Das tragbare Kommunikationsgerät decodiert den Code und sendet die ersten Informationen durch eine Kurznachricht über einen Telekommunikationsdienst an einen Server.

Hierbei wird zur Identifizierung des Feldgerätes ein Verfahren genutzt, das Fehler bei der Identifikation, wie beispielsweise durch falsche Eingaben, reduziert.

Indem das tragbare Kommunikationsgerät die ersten Informationen zur Identifikation des Feldgerätes an das als Server ausgestaltete System mittels einer Kurznachricht über einen Telekommunikationsdienst sendet, können die ersten Informationen und die zweiten Informationen zur Identifizierung des tragbaren Kommunikationsgerätes selbst in vorteilhafter Weise gemeinsam gesendet werden. Dabei kann die Identifizierung des tragbaren Kommunikationsgerätes beispielsweise über die Mobilfunknummer der gesendeten Kurznachricht erfolgen. Ferner können zur Übertragung der ersten Informationen auch Technologien wie Instant Messaging oder das Verschicken von e-Mails verwendet werden. Die Identifizierung erfolgt dann über die Authentisierung am Instant Messaging Server oder über die Signatur einer e-Mail.

Gemäß einer weiteren Ausgestaltung der Erfindung ordnet das System einer Kombination aus den ersten Informationen und den zweiten Informationen ein erstes Passwort nach einer festen Regel zu. Außerdem legt das System das erste Passwort als die erste Zugangsinformation in Abhängigkeit von der Kombination fest. Das Feldgerät ordnet der Kombination ein zweites Passwort ebenfalls nach der festen Regel zu und legt das zweite Passwort als die zweite Zugangsinformation in Abhängigkeit von der Kombination fest.

In dieser Ausgestaltung wird vom System ein statisches Passwort verschickt, wobei das System dieses statische erste Passwort in Abhängigkeit von der Kombination ermittelt. Das Feldgerät besitzt eine lokale Datenbank, in welcher für mögliche Kombinationen aus den ersten Informationen und den zweiten Informationen entsprechend der Zuordnung durch das System die zugehörigen Passwörter hinterlegt sind.

Gemäß einer weiteren vorteilhaften Ausgestaltung des Verfahrens wird dem System und dem Feldgerät ein gemeinsames Geheimnis vorgegeben. Außerdem sendet das tragbare Kommunikationsgerät zusätzlich zu den ersten Informationen und den zweiten Informationen ein Datum an das System. Das System berechnet mit Hilfe des gemeinsamen Geheimnisses aus den ersten Informationen, den zweiten Informationen und dem Datum ein erstes Einmalpasswort als erste Zugangsinformation. Das Feldgerät berechnet mit Hilfe des gemeinsamen Geheimnisses aus den zweiten Informationen und dem Datum sowie den dem Feldgerät bekannten ersten Informationen ein zweites Einmalpasswort als zweite Zugangsinformation.

Bei dem gemeinsamen Geheimnis kann es sich um eine Einwegfunktion wie beispielsweise eine Hashfunktion (SHA-1, SHA-256, etc.) handeln oder um eine schlüsselabhängige Hashfunktion, auch Message Authentication Code (MAC) genannt, (HMAC-SHA-1, HMAC-SHA-256, etc.). Ferner können symmetrische Verschlüsselungsalgorithmen wie beispielsweise Data Encryption Standard (DES), Tripple Data Encryption Standard (3DES) oder Advanced Encryption Standard (AES) in einem sogenannten Cipher-Block-Chaining MAC-Modus (CBC MAC Mode) eingesetzt werden.

Durch die Verwendung von Einwegfunktionen zur Berechnung von Einmalpasswörtern wird das Verschicken von statischen Passwörtern unnötig. Statische Passwörter stellen ein Sicherheitsrisiko dar, vor allem weil Sie ausgespäht werden können, beispielsweise indem sich ein Angreifer Zugriff verschafft zu den mit dem Mobilgerät ausgetauschten Informationen.

Als Datum wird in der vorliegenden Patentanmeldung eine Angabe verstanden zur Festlegung eines Zeitraumes, innerhalb dessen das generierte Einmalpasswort Gültigkeit hat. Es handelt sich beispielsweise dabei um die Angabe des aktuellen Tagesdatums, wobei das generierte Einmalpasswort in diesem Fall beispielsweise für den angegebenen Tag gültig ist.

Gemäß einer weiteren vorteilhaften Ausgestaltung des Verfahrens wird dem System ein erstes Geheimnis und ein zweites Geheimnis vorgegeben, sowie dem Feldgerät das zweite Geheimnis. Das tragbare Kommunikationsgerät sendet zusätzlich zu den ersten Informationen und den zweiten Informationen ein Datum an das System. Das System ordnet den zweiten Informationen ein erstes Passwort nach einer festen Regel zu und berechnet mithilfe des ersten Geheimnisses ein Zwischenpasswort in Abhängigkeit von den ersten Informationen, den zweiten Informationen und dem ersten Passwort. Mithilfe des zweiten Geheimnisses berechnet das System dann aus dem Zwischenpasswort und dem Datum ein erstes sitzungsspezifisches Einmalpasswort als erste Zugangsinformation.
Das Feldgerät ermittelt anhand der zweiten Informationen das Zwischenpasswort, wobei das Feldgerät keine Kenntnis des ersten Passwortes besitzt und dieses auch nicht ermitteln kann. Schließlich berechnet das Feldgerät mithilfe des zweiten Geheimnisses aus dem Zwischenpasswort und dem Datum ein zweites sitzungsspezifisches Einmalpasswort als zweite Zugangsinformation.

Das so ausgestaltete Verfahren ermöglicht einerseits eine zentrale Verwaltung von Zugangsdaten auf dem System: dabei ist beispielsweise den zweiten Informationen, die das tragbare Kommunikationsgerät oder seinen Nutzer identifizieren, das dazugehörige Passwort zugeordnet. Beispielsweise existiert eine Liste, die alle in der Automatisierungsanlage arbeitenden Servicetechniker mit ihrem jeweiligen Passwort auflistet. Dies unterstützt auch eine Auditierbarkeit, die für administrative Aktionen oftmals gefordert ist.
Andererseits ist es dem Feldgerät nicht möglich, die den zweiten Informationen zugehörigen statischen Passwörter zu ermitteln. Das Feldgerät hat nur Kenntnis über eine Zuordnung von den zweiten Informationen zu dem Zwischenpasswort, welches gerätespezifischen ist und abgeleitet wird von den ersten Informationen, den zweiten Informationen und dem nur dem System bekannten rollenspezifischen Passwort und welches von dem System berechnet werden kann. Durch die Hinterlegung und Verwendung des gerätespezifischen Passwortes auf dem Feldgerät wird eine lokale Bindung an das Gerät realisiert und damit die Gefahr verringert, dass systemweit eingesetzte Passwörter, wie eben z.B. rollenspezifische Passwörter, missbraucht werden können, wenn beispielsweise ein Feldgerät kompromittiert wird.

Gemäß einer weiteren vorteilhaften Ausgestaltung des Verfahrens sind die zweiten Informationen als eine Telefonnummer des Nutzers ausgestaltet, welcher das System eine Rolle zuordnet.
Es kann ferner ein internetfähiges Smartphone zur Übertragung der zweiten Informationen verwendet werden, das eine Internet-Protocol-Verbindung zu Diensten im Internet aufmachen kann. Dann kann beispielsweise ein symbolischer Name eines Nutzers, wie ein Alias oder Nickname, genutzt werden oder auch das Zertifikat eines Nutzers, mit dem beispielsweise eine signierte e-Mail überprüft wird.

Damit kann ein Mobiltelefon von mehreren unterschiedlichen Nutzern zur Autorisierung eingesetzt werden. Die Rolle wird dann durch die Telefonnummer festgelegt. Dies kann insbesondere vorteilhaft sein, wenn einem Nutzer mehre Rollen zuordenbar sind.

Gemäß einer weiteren vorteilhaften Ausgestaltung des Verfahrens umfassen die zweiten Informationen eine Angabe über eine Rolle des Nutzers.

So wird in eindeutiger Weise festgelegt, in welcher Rolle sich ein Nutzer mit einem tragbaren Kommunikationsgerät autorisieren möchte.

Gemäß einer vorteilhaften Ausgestaltung des erfindungsgemäßen Verfahrens werden die zweiten Informationen und/oder die erste Zugangsinformation und/oder das Datum zum Übertragen von dem tragbaren Kommunikationsgerät zu dem Feldgerät auf einer Eingabefläche des Feldgerätes eingegeben. Für eine derartige Ausgestaltung des Verfahrens muss das Feldgerät lediglich über ein Minimalinterface zur Eingabe der Informationen verfügen. Dies ist insbesondere vorteilhaft, wenn die Informationen in Form von Ziffern vorliegen.

Gemäß einer vorteilhaften Ausgestaltung des Verfahrens werden die zweiten Informationen und/oder die erste Zugangsinformation und/oder das Datum über drahtlose Schnittstellen von dem tragbaren Kommunikationsgerät zu dem Feldgerät übertragen.

Das Mobiltelefon der an der Automatisierungsanlage tätigen Person verfügt in der Regel über Schnittstellen zur Nahfeldkommunikation (NFC), wie beispielsweise zur Radio-Frequency Identification-Anwendung (RFID-Anwendung). Verfügt auch das zu administrierende Feldgerät über eine entsprechende Schnittstelle, so können Anmeldedaten in Form von den zweiten Informationen oder der ersten Zugangsinformation lokal eingeschränkt übermittelt werden. Damit entfällt eine manuelle Eingabe der Anmeldedaten und die Übertragungsfehlerrate durch Ablesefehler oder Fehleingaben wird reduziert.

Die Erfindung umfasst ferner ein Zugangskontrollsystem zur Autorisierung eines Nutzers durch ein tragbares Kommunikationsgerät an einem Feldgerät, umfassend:
- das tragbare Kommunikationsgerät zum Erfassen von ersten Informationen, zum Senden der ersten Informationen und von zweiten Informationen an eine Rechnerplattform und zum Senden der zweiten Informationen und einer ersten Zugangsinformation an das Feldgerät;
- eine Rechnerplattform mit Serverfunktionalität zum Empfangen von den ersten Informationen und den zweiten Informationen, zum Ermitteln von der ersten Zugangsinformation in Abhängigkeit von den ersten Informationen und den zweiten Informationen und zum Senden der ersten Zugangsinformation an das tragbare Kommunikationsgerät;
- Feldgerät zum Ermitteln einer zweiten Zugangsinformation in Abhängigkeit von den zweiten Informationen und zum Gewähren eines Zugangs zu dem Feldgerät in Abhängigkeit von einem Abgleich der ersten Zugangsinformation und der zweiten Zugangsinformation.

Gemäß einer vorteilhaften Ausgestaltung umfasst das Zugangskontrollsystem ferner mindestens eine weitere Einheit zur Verwendung in einem der Verfahrensschritte gemäß den oben genannten Verfahren.

Die Erfindung wird nachfolgend mit Ausführungsbeispielen anhand der Figuren näher erläutert. Es zeigen:
- Figur 1: eine schematische Darstellung des Autorisierungsverfahrens gemäß einem ersten Ausführungsbeispiel der Erfindung;
- Figur 2: eine schematische Darstellung des Autorisierungsverfahrens gemäß einem zweiten Ausführungsbeispiel der Erfindung;
- Figur 3: eine schematische Darstellung des Autorisierungsverfahrens gemäß einem dritten Ausführungsbeispiel der Erfindung.

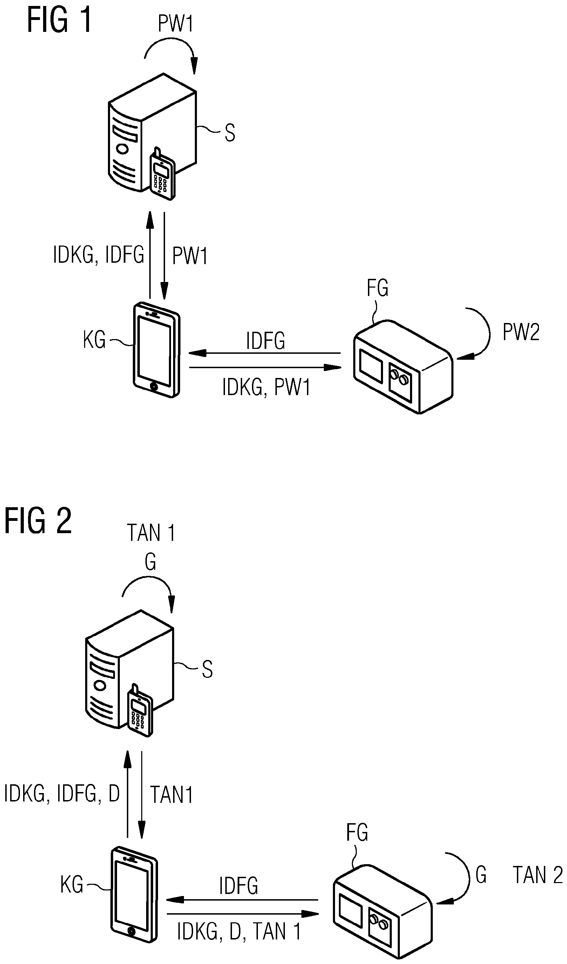

Anhand von Figur 1 wird ein erstes Ausführungsbeispiel des erfindungsgemäßen Verfahrens im Umfeld der Automatisierungstechnik, beispielsweise im Bereich der industriellen Automatisierung oder der Energieautomatisierung, erläutert. Ein Feldgerät FG innerhalb einer Automatisierungsanlage weist einen an ihm befestigen Aufkleber auf, auf dem ein Quick Response-Code (QR-Code) abgebildet ist. Alternativ kann dieser QR Code auch über ein auf dem Feldgerät vorhandenes Display angezeigt werden.

Aus dem Stand der Technik sind Barcodes bekannt, die Informationen über ein Objekt optisch darstellen, indem Breite und Abstand paralleler Linien variiert werden und kennzeichnend für das Objekt sind. Ebenso sind QR-Codes bekannt, die einen Barcode in Matrixform darstellen, wobei schwarze Elemente in einem quadratischen Muster auf einem weißen Hintergrund angeordnet sind. Bei den codierten Informationen kann es sich beispielsweise um binäre oder alphanumerische Daten handeln.

Zu dem Feldgerät FG soll beispielsweise ein Servicetechniker Zugang haben, um Wartungsarbeiten an dem Feldgerät FG vorzunehmen oder um das Feldgerät FG auszutauschen oder um Konfigurationseinstellungen festzulegen. Auch im Bereich der Energieautomatisierung ist ein Eingreifen einer Person mit entsprechender Autorisierung nötig, beispielsweise wenn Parameter zu justieren sind, Kontrollen vorgenommen werden oder ein Ablesen von Daten stattfindet. Es kann sich dabei um Servicetechniker, Ingenieure oder weitere Personen handeln, die zu festgelegten Aktionen innerhalb der Automatisierungsanlage befugt sind.

Dabei kommt es in vielen Fällen nicht auf die Person mit Ihrem Namen an, sondern lediglich auf eine Rolle, mit der die Rechte zu bestimmten Aktionen verknüpft sind. Beispielsweise kann eine Rolle durch die Verwendung eines Kommunikationsgerätes KG festgelegt sein. Dabei ist für einen Nutzer des Kommunikationsgerätes KG, welches beispielsweise über eine Telefonnummer identifizierbar ist, die Rolle des Servicetechnikers festgelegt. Der Nutzer des tragbaren Kommunikationsgerätes KG startet nun ein Verfahren zur Autorisierung an dem Feldgerät FG, indem er den auf dem Feldgerät FG befindlichen QR-Code fotografiert. Für Arbeitskräfte im Umfeld einer Automatisierungsanlage gehört ein tragbares Kommunikationsgerät KG, also beispielsweise ein Mobiltelefon oder Smartphone, zur üblichen Ausrüstung. Solche Mobiltelefone oder Smartphones sind in der Regel mit einer Kamera ausgestattet, so dass ein Fotografieren des Barcodes auf einfache Weise möglich ist.

Das tragbare Kommunikationsgerät KG decodiert den QR-Code und erhält so erste Informationen IDFG über das Feldgerät FG, wie beispielsweise eine Identifikationsnummer, eine Gerätebezeichnung oder eine Seriennummer. Über einen Telekommunikationsdienst (Short Message Service, SMS) werden die ersten Informationen IDFG in Form der Seriennummer des Feldgerätes FG an einen Server S gesendet. Durch das Senden der Kurznachricht werden dem Server S zusammen mit den ersten Informationen IDFG gleichzeitig zweite Informationen IDKG, welche das tragbare Kommunikationsgerät KG identifizieren, bereitgestellt. Dazu wird in diesem Beispiel eine Rufnummer des tragbaren Kommunikationsgerätes übermittelt, wobei die zweiten Informationen IDKG ferner eine Rolle des Nutzers umfassen. Dem Server S ist über die Rufnummernübermittlung gleichzeitig eine Rolleninformation des Nutzers bekannt, da die Mobiltelefone innerhalb einer Automatisierungsanlage mit der jeweils dazugehörigen Rolleninformation auf dem Server S hinterlegt sind. So wird einem Mobiltelefon auch dann die richtige Rolle zugeordnet, wenn ein Mobiltelefon von mehreren Nutzern genutzt wird, falls das Mobiltelefon ausschlaggebend für die Zuordnung der Rolle sein soll.

Nun kann aufgrund der ersten Informationen IDFG, der zweiten Informationen IDKG oder aufgrund einer Kombination KOMB aus den ersten Informationen IDFG und den zweiten Informationen IDKG vom Server S eine erste Zugangsinformation ZI1 ermittelt werden. Dabei handelt es sich um ein erstes Passwort PW1, das jedem Nutzer des tragbaren Kommunikationsgerätes KG für den Zugriff auf Feldgeräte innerhalb der Automatisierungsanlage, welche zu einer bestimmten Geräteklasse gehören, zugeordnet ist.

Dem Server S sind dafür in einer Variante alle Mobiltelefonnummern innerhalb der Automatisierungsanlage vorgegeben und jede Mobiltelefonnummer ist mit einer Rolle verknüpft. Außerdem wird jeder übermittelten Seriennummer eines Feldgerätes eine Feldgeräteklasse zugeordnet, beispielsweise indem ein bestimmter Ziffernblock innerhalb der Seriennummer die Geräteklasse festlegt.

Das erste Passwort PW1 wird von dem Server S ebenfalls über eine Kurznachricht über SMS zurück an das tragbare Kommunikationsgerät KG gesendet. Nun gibt der Nutzer des tragbaren Kommunikationsgerätes KG an der Benutzeroberfläche des Feldgerätes FG, die für Eingaben wie Ziffern ausgelegt ist, die zweiten Informationen IDKG in Form seiner Rolle ein. Das Feldgerät FG ermittelt nun aufgrund einer mit der Zuordnung auf dem Server S stimmigen Zuordnung das der Rolle am Feldgerät FG zugeordnete zweite Passwort PW2.

Stimmt das vom Feldgerät FG ermittelte zweite Passwort PW2 mit dem vom Nutzer am Feldgerät FG eingegebenen ersten Passwort PW1 überein, so wird der Nutzer für den Zugriff auf das Feldgerät FG autorisiert.

Anhand von Figur 2 wird nun ein weiteres Ausführungsbeispiel beschrieben. Dabei werden wie oben beschrieben erste Informationen IDFG zur Identifizierung eines Feldgerätes FG durch ein tragbares Kommunikationsgerät KG erfasst und zusammen mit zweiten Informationen IDKG mittels einer Kurznachricht an einen Server S gesendet. Dabei wird zusätzlich ein Datum D geschickt. Das Datum D wird in einer Variante des Ausführungsbeispiels vom Server S erfasst, in dem der Zeitpunkt des Eingangs der Kurznachricht registriert wird.
Für den Server S und das Feldgerät FG existiert ein gemeinsames Geheimnis G.
Über dieses Geheimnis berechnet der Server S ein Einmalpasswort TAN1, welches durch die ersten Informationen IDFG, die zweiten Informationen IDKG und das Datum D festgelegt ist. Dabei ist für jede Mobiltelefonnummer, die durch die Kurznachricht übermittelt wird, auf dem Server S ein Name des Nutzers des Mobiltelefons hinterlegt und jedem Nutzer wiederum eine Rolle zugeordnet.

Bei der Berechnung, in die das gemeinsame Geheimnis G eingeht, kann es sich um eine Einwegfunktion wie beispielsweise eine Hashfunktion (SHA-1, SHA-256, etc.) handeln oder um eine schlüsselabhängige Hashfunktion, auch Message Authentication Code (MAC) genannt, (HMAC-SHA-1, HMAC-SHA-256, etc.). Ferner können symmetrische Verschlüsselungsalgorithmen wie beispielsweise Data Encryption Standard (DES), Tripple Data Encryption Standard (3DES) oder Advanced Encryption Standard (AES) in einem sogenannten Cipher-Block-Chaining MAC-Modus (CBC MAC Mode) eingesetzt werden.

Mittels solcher Funktionen ist es möglich, Werte in Abhängigkeit von Angaben, die dem Server S vorgegeben oder übermittelt werden, zu erzeugen, wobei es praktisch unmöglich ist, durch die Vorgabe anderer Angaben gleichfalls diese Werte zu erzeugen.

So werden beispielsweise durch den Einsatz eines Geheimnisses G, das sich der Server S und das Feldgerät FG teilen, ein erstes Einmalpasswort TAN1 und ein zweites Einmalpasswort TAN2 als jeweiliger Hashwert erzeugt. Falls der auf dem Server S erzeugte Hashwert nicht mit dem auf dem Feldgerät FG erzeugten übereinstimmt, ist klar, dass die an den Server S oder das Feldgerät übermittelten Daten wie beispielsweise das Datum D nicht korrekt oder manipuliert sind.

Das Einmalpasswort TAN1 wird wiederum in Form einer Kurznachricht über SMS an das tragbare Kommunikationsgerät KG gesendet. In der Kurznachricht sind gleichzeitig die zweiten Informationen IDKG und das Datum D enthalten.

Sowohl das tragbare Kommunikationsgerät KG als auch das Feldgerät FG besitzen eine Nahfeldkommunikations-Schnittstelle (NFC-Schnittstelle), beispielsweise eine RFID-Schnittstelle, über welche Anmeldedaten lokal eingeschränkt übermittelt werden können. Bei der Übertragung der zweiten Informationen IDKG, des Datums D sowie des ersten Einmalpasswortes TAN1 kann ein NFC-Verfahren zur Bereitstellung der Daten auf dem Feldgerät FG genutzt werden, wobei das Mobiltelefon ähnlich einer Smartcard verwendet wird und das Feldgerät FG als lesendes Medium.

Neben RFID-Verfahren sind andere NFC-Verfahren wie Bluetooth aus dem Telekommunikationsumfeld bekannt, wodurch ein Zugriff auf eine SIM-Karte eines Mobiltelefons oder auf ausgewählte Daten möglich ist.

Das zweite Einmalpasswort TAN2 wird auf Basis der gleichen Einwegfunktion wie der des Servers S vom Feldgerät FG berechnet in Abhängigkeit von den übermittelten zweiten Informationen IDKG, dem Datum D und den dem Feldgerät FG bekannten ersten Informationen IDFG.
Durch das Senden der zweiten Informationen IDKG vom Server ist es auch möglich unterschiedliche Rolleninformation zum Nutzer zu schicken. Diese können z.B. abhängig von der Zeit oder auch der geographischen Lage des Aufenthaltsortes des Nutzers bzw. des tragbaren Kommunikationsgerätes KG sein. Der Aufenthaltsort wird über Methoden wie Global Positioning System oder Triangulation bestimmt. Bekannt ist hierbei die Ortung über die Cisco Wireless Location Appliance, wobei eine Vielzahl von Geräten zeitgleich mit ihrem Aufenthaltsort aufgezeichnet wird mittels WLAN (Wireless Location Area Network).

Stimmt das so berechnete zweite Einmalpasswort TAN2 mit dem übermittelten Einmalpasswort TAN1 überein, wird wiederum der Zugriff auf das Feldgerät FG freigegeben.

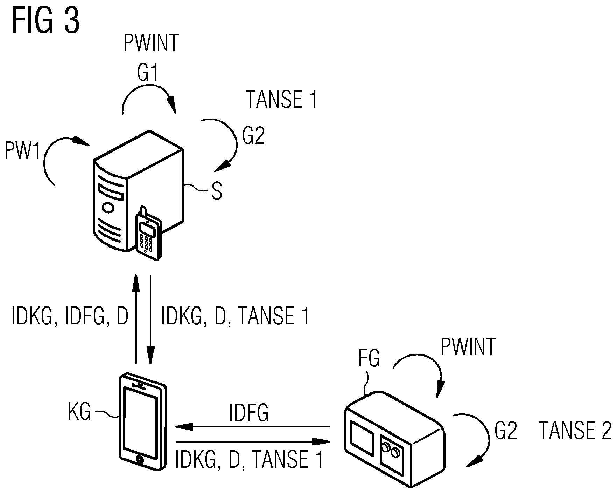

In einem dritten Ausführungsbeispiel wird nun eine Kombination aus statischer Passwortzuordnung und Erzeugung von Einmalpasswörtern vorgestellt. Anhand von Figur 3 wird die Autorisierung eines Nutzers eines tragbaren Kommunikationsgerätes KG, zum Beispiel einer in einer Automatisierungsanlage beschäftigten Personen mit der Rolle eines Ingenieurs, an einem Feldgerät FG der Automatisierungsanlage erläutert. Das Feldgerät FG ist dazu derart ausgestaltet, dass es auf einen Befehl hin, wie beispielsweise einen Knopfdruck durch den Nutzer, einen Flicker Code erzeugen kann. Ein Flicker Code besteht aus flackernden schwarzen und weißen Flächen und wird mit jedem Knopfdruck aufs neue zufällig erzeugt. Alternativ kann hierbei auch ein frisch erzeugter QR-Code angezeigt werden. Die Haupteigenschaft ist, dass dieser Code nicht statisch ist. Dadurch ist ein Missbrauch beim Erfassen der ersten Informationen IDFG zur Identifizierung des Feldgerätes FG, wie beispielsweise ein Entfernen oder Kopieren eines dauerhaft am Feldgerät FG befindlichen Codes, nur schwer möglich.

Mit dem tragbaren Kommunikationsgerät KG des Nutzers, beispielsweise dem Smartphone des Ingenieurs, wird der Flicker Code analog zu den oben beschriebenen Verfahren mit einer Kamera aufgenommen.
Durch das Fotografieren eines nicht statischen Codes mit dem Mobiltelefon kann ferner ein Betrug durch einen Eingriff von außerhalb verhindert werden, da die ersten Informationen lokal am Feldgerät durch das tragbare Kommunikationsgerät erfasst werden.

Der Flicker Code wird durch das tragbare Kommunikationsgerät KG decodiert und die decodierten Informationen werden als erste Informationen IDFG über eine Kurznachricht mittels SMS an einen Server S gesendet. Der Server S ist für die Kommunikation der Elemente der Automatisierungsanlage untereinander ausgestaltet. Zusätzlich werden durch das Senden der Kurznachricht weitere Informationen IDKG übermittelt, die in diesem Fall so ausgestaltet sind, dass der Nutzer seine Rolle explizit angibt. Dies vermeidet Unklarheiten, falls ein Nutzer sich mit unterschiedlichen Rollen anmelden möchte. Außerdem wird ein Datum D übermittelt, das durch den Zeitpunkt des Absendens der Kurznachricht festgelegt wird.

Auf dem Server S findet nun eine Zuordnung der zweiten Informationen IDKG zu einem ersten Passwort PW1 statt. Dafür ist dem Server S eine Tabelle vorgegeben, die jeder Rolle ein rollenspezifisches Passwort, das erste Passwort PW1, zuordnet.

Mit Hilfe eines ersten Geheimnisses G1, das in eine Einwegfunktion wie insbesondere eine Hashfunktion eingeht, wird vom Server ein Zwischenpasswort PWINT in Abhängigkeit von den zweiten Informationen IDKG, die die Rolle beschreiben, dem ersten Passwort PW1, welches rollenspezifisch ist, sowie den ersten Informationen IDFG, welche aus der decodierten Information aus dem Flicker Code, zum Beispiel der Seriennummer, bestehen, berechnet.

Mit Hilfe eines zweiten Geheimnisses G2 berechnet der Server S in Abhängigkeit von dem Zwischenpasswort PWINT und dem übermittelten Datum D ein erstes sitzungsspezifisches Einmalpasswort TANSE1. Aus dem Stand der Technik sind hierfür MAC-Verfahren bekannt. Anschließend werden über eine Kurznachricht die zweiten Informationen IDKG, das Datum D und das sitzungsspezifische Einmalpasswort TANSE1 zurück an das tragbare Kommunikationsgerät KG des Ingenieurs gesendet.

Die Eingabe der zur Autorisierung benötigten Daten am Feldgerät FG erfolgt über drahtlose Kommunikationstechnologien wie beispielsweise NFC. Dazu ist eine entsprechende Schnittstelle sowohl am tragbaren Kommunikationsgerät KG als auch am Feldgerät FG vorgesehen.

Das Feldgerät FG ermittelt nun aus den zweiten Informationen IDKG das Zwischenpasswort PWINT, das der Rolle des zu autorisierenden Nutzers zugeordnet ist. Dabei verfügt es lediglich über eine Zuordnung von Rolle zu Zwischenpasswort PWINT, welches eine gerätespezifische Ableitung des rollenspezifischen Passwortes PW1 darstellt. Das Feldgerät FG ist dagegen nicht in der Lage, das erste Passwort zu ermitteln, so dass im Falle einer Kompromittierung des Feldgerätes FG nur Passwörter ausgespäht werden können, die für das kompromittierte Feldgerät selbst gelten.

Mit Hilfe des zweiten Geheimnisses G2 ermittelt das Feldgerät FG auf Basis des Zwischenpasswortes PWINT und dem übermittelten Datum D ein zweites sitzungsspezifisches Einmalpasswort TANSE2.

In einer Variante wird das Datum D in der Form angegeben, dass gleichzeitig mit dem Zeitpunkt auch ein Zeitraum angegeben wird, für den der Zeitpunkt selbst zur Ermittlung der Einmalpasswörter verwendet werden soll. So kann beispielsweise beim Absenden der Kurznachricht vom tragbaren Kommunikationsgerät KG an den Server S der Zeitpunkt des Sendens mit der kleinsten Einheit der Minute angegeben werden und zusätzlich eine Zeiteinheit von beispielsweise zehn Minuten. Erfolgt das Übermitteln des Datums D, also dem ursprünglichen Sendezeitpunkt und der Zeiteinheit, vom tragbaren Kommunikationsgerät KG zum Feldgerät FG innerhalb der angegebenen Zeiteinheit, so wird für die Berechnung des zweiten sitzungsspezifischen Einmalpasswortes TANSE2 durch das Feldgerät FG der ursprüngliche Sendezeitpunkt verwendet. Um zu ermitteln, ob die Anforderungen des ersten sitzungsspezifischen Einmalpasswortes TANSE1 durch das tragbare Kommunikationsgerät KG und das Übertragen der zur Autorisierung benötigten Daten durch den Nutzer auf das Feldgerät FG innerhalb der vorgegebenen Zeiteinheit geschieht, gleicht das Feldgerät FG den Sendezeitpunkt mit dem Zeitpunkt der Übertragung der Anmeldedaten an das Feldgerät FG ab.

Stimmen das erste sitzungsspezifische Einmalpasswort TANSE1 und das zweite sitzungsspezifische Einmalpasswort TANSE2 überein, so wird wiederum der Zugriff zu dem Feldgerät FG gewährt.

Die Einheiten tragbares Kommunikationsgerät (KG), Rechnerplattform, Feldgerät (FG) sowie die weitere Einheit können in Software, Hardware oder in einer Kombination aus Soft- und Hardware realisiert und ausgeführt werden.

So können die durch die Einheiten realisierten Schritte als Programm-Code auf einem Speichermedium, insbesondere einer Festplatte, CR-ROM oder einem Speichermodul abgelegt sein, wobei die einzelnen Anweisungen des Programm-Codes von mindestens einer Recheneinheit, umfassend einen Prozessor, ausgelesen und verarbeitet werden.

Der Prozessor ist mit dem Speichermedium über einen Bus zum Datenaustausch verbunden.

Ferner kann eine Ein-Ausgabe Einheit über den Bus angeschlossen werden, wobei mittels der Ein-Ausgabe Einheit Daten, wie beispielsweise Nachrichten, empfangen und/oder versendet werden können.

Die beschriebenen Ausgestaltungen und Ausführungsbeispiele lassen sich frei miteinander kombinieren.

## Patentansprüche

1. Verfahren zur Autorisierung eines Nutzers durch ein tragbares Kommunikationsgerät (KG) an einem Feldgerät (FG), mit den folgenden Schritten:
- Erfassen von ersten Informationen (IDFG) zur Identifizierung des Feldgerätes (FG) durch das tragbare Kommunikationsgerät (KG) ;
- Senden der ersten Informationen (IDFG) und von zweiten Informationen (IDKG) zur Identifizierung des tragbaren Kommunikationsgerätes und/oder seines Nutzers von dem tragbaren Kommunikationsgerät (KG) zu einem System (S);
- Ermitteln einer ersten Zugangsinformation (ZI1) in Abhängigkeit von den ersten Informationen (IDFG) und den zweiten Informationen (IDKG) durch das System (S) und Senden der ersten Zugangsinformation (ZI1) vom System (S) an das tragbare Kommunikationsgerät (KG);
- Übertragen der zweiten Informationen (IDKG) und der ersten Zugangsinformation (ZI1) von dem tragbaren Kommunikationsgerät (KG) zu dem Feldgerät (FG);
- Ermitteln einer zweiten Zugangsinformation (ZI2) in Abhängigkeit von den zweiten Informationen (IDKG) durch das Feldgerät (FG) und Abgleich der ersten Zugangsinformation (ZI1) mit der zweiten Zugangsinformation (ZI2);
- Gewähren eines Zugangs zu dem Feldgerät (FG) für den Nutzer, falls die erste Zugangsinformation (ZI1) und die zweite Zugangsinformation (ZI2) übereinstimmen.

2. Verfahren nach Anspruch 1,
- wobei der Nutzer zum Erfassen der ersten Informationen (IDFG) einen Code, insbesondere einen eindimensionalen Barcode oder zweidimensionalen Quick-Response-Code, mit dem tragbaren Kommunikationsgerät (KG) fotografiert,
- wobei das tragbare Kommunikationsgerät (KG) den Code dekodiert,
- wobei das tragbare Kommunikationsgerät (KG) die ersten Informationen (IDFG) mittels einer Kurznachricht über einen Telekommunikationsdienst an das System (S) sendet,
- und wobei das System (S) ein Server ist.

3. Verfahren nach Anspruch 1 oder 2,
- wobei das System (S) einer Kombination (KOMB) aus den ersten Informationen (IDFG) und den zweiten Informationen (IDKG) ein erstes Passwort (PW1) nach einer festen Regel zuordnet,
- wobei das System (S) das erste Passwort (PW1) als die erste Zugangsinformation (ZI1) in Abhängigkeit von der Kombination (KOMB) festlegt,
- wobei das Feldgerät (FG) der Kombination (KOMB) ein zweites Passwort (PW2) ebenfalls nach der festen Regel zuordnet,
- wobei das Feldgerät (FG) das zweite Passwort (PW2) als die zweite Zugangsinformation (ZI2) in Abhängigkeit von der Kombination (KOMB) festlegt.

4. Verfahren nach Anspruch 1 oder 2,
- wobei dem System (S) und dem Feldgerät (FG) ein gemeinsames Geheimnis (G) vorgegeben wird,
- wobei das tragbare Kommunikationsgerät (KG) zusätzlich zu den ersten Informationen (IDFG) und den zweiten Informationen (IDKG) ein Datum (D) an das System (S) sendet,
- wobei das System (S) mithilfe des gemeinsamen Geheimnisses (G) aus den ersten Informationen (IDFG), den zweiten Informationen (IDKG) und dem Datum (D) ein erstes Einmalpasswort (TAN1) als erste Zugangsinformation (ZI1) berechnet,
- wobei das Feldgerät (FG) mithilfe des gemeinsamen Geheimnisses (G) aus den zweiten Informationen (IDKG) und dem Datum (D) sowie den dem Feldgerät bekannten ersten Informationen (IDFG) ein zweites Einmalpasswort (TAN2) als zweite Zugangsinformation (ZI2) berechnet.

5. Verfahren nach Anspruch 1 oder 2,
- wobei dem System (S) ein erstes Geheimnis (G1) und ein zweites Geheimnis (G2) vorgegeben wird,
- wobei dem Feldgerät (FG) das zweite Geheimnis (G2) vorgegeben wird,
- wobei das tragbare Kommunikationsgerät (KG) zusätzlich zu den ersten Informationen (IDFG) und den zweiten Informationen (IDKG) ein Datum (D) an das System (S) sendet,
- wobei das System (S) den zweiten Informationen (IDKG) ein erstes Passwort (PW1) nach einer festen Regel zuordnet,
- wobei das System (S) mithilfe des ersten Geheimnisses (G1) ein Zwischenpasswort (PWINT) berechnet in Abhängigkeit von den ersten Informationen (IDFG), den zweiten Informationen (IDKG) und dem ersten Passwort (PW1),
- wobei das System (S) mithilfe des zweiten Geheimnisses (G2) aus dem Zwischenpasswort (PWINT) und dem Datum (D) ein erstes sitzungsspezifisches Einmalpasswort (TANSE1) als erste Zugangsinformation (ZI1) berechnet,
- wobei das Feldgerät (FG) anhand der zweiten Informationen (IDKG) das Zwischenpasswort (PWINT) ermittelt, wobei das Feldgerät (FG) keine Kenntnis des ersten Passwortes (PW1) besitzt und dieses auch nicht ermitteln kann,
- wobei das Feldgerät (FG) mithilfe des zweiten Geheimnisses (G2) aus dem Zwischenpasswort (PWINT) und dem Datum (D) ein zweites sitzungsspezifisches Einmalpasswort (TANSE2) als zweite Zugangsinformation (ZI2) berechnet.

6. Verfahren nach einem der vorstehenden Ansprüche,
wobei die zweiten Informationen (IDKG) als eine Telefonnummer des Nutzers ausgestaltet sind, welcher das System (S) eine Rolle zuordnet.

7. Verfahren nach einem der Ansprüche 1 bis 6,
wobei die zweiten Informationen (IDKG) eine Angabe über eine Rolle des Nutzers umfassen.

8. Verfahren nach einem der vorstehenden Ansprüche,
wobei die zweiten Informationen (IDKG) und/oder die erste Zugangsinformation (ZI1) und/oder ein Datum (D) zum Übertragen von dem tragbaren Kommunikationsgerät (KG) zu dem Feldgerät (FG) auf einer Eingabefläche des Feldgerätes (FG) eingegeben werden.

9. Verfahren nach einem der Ansprüche 1 bis 7,
wobei die zweiten Informationen (IDKG) und/oder die erste Zugangsinformation (ZI1) und/oder ein Datum (D) über drahtlose Schnittstellen von dem tragbaren Kommunikationsgerät (KG) zu dem Feldgerät (FG) übertragen werden.

10. Zugangskontrollsystem zur Autorisierung eines Nutzers durch ein tragbares Kommunikationsgerät (KG) an einem Feldgerät (FG), umfassend:
- das tragbare Kommunikationsgerät (KG) zum Erfassen von ersten Informationen (IDFG), zum Senden der ersten Informationen (IDFG) und von zweiten Informationen (IDKG) an eine Rechnerplattform und zum Senden der zweiten Informationen (IDKG) und einer ersten Zugangsinformation (ZI1) an das Feldgerät (FG);
- eine Rechnerplattform mit Serverfunktionalität zum Empfangen von den ersten Informationen (IDFG) und den zweiten Informationen (IDKG), zum Ermitteln von der ersten Zugangsinformation (ZI1) in Abhängigkeit von den ersten Informationen (IDFG) und den zweiten Informationen (IDKG) und zum Senden der ersten Zugangsinformation (ZI1) an das tragbare Kommunikationsgerät (KG);
- Feldgerät (FG) zum Ermitteln einer zweiten Zugangsinformation (ZI2) in Abhängigkeit von den zweiten Informationen (IDKG) und zum Gewähren eines Zugangs für den Nutzer zu dem Feldgerät (FG) in Abhängigkeit von einem Abgleich der ersten Zugangsinformation (ZI1) und der zweiten Zugangsinformation (ZI2).

## Claims

1. Method for authorizing a user at a field device (FG) by means of a portable communications device (KG), comprising the following steps:
- the portable communications device (KG) acquiring first information (IDFG) for identifying the field device (FG);
- the portable communications device (KG) sending to a system (S) the first information (IDFG) and sending second information (IDKG) for identifying the portable communications device and/or the user thereof;
- the system (S) determining a first piece of access information (ZI1) on the basis of the first information (IDFG) and the second information (IDKG), and the system (S) sending the first piece of access information (ZI1) to the portable communications device (KG);
- the portable communications device (KG) transmitting the second information (IDKG) and the first piece of access information (ZI1) to the field device (FG);
- the field device (FG) determining a second piece of access information (ZI2) on the basis of the second information (IDKG), and comparing the first piece of access information (ZI1) with the second piece of access information (ZI2);
- if the first piece of access information (ZI1) and the second piece of access information (ZI2) match, allowing access to the field device (FG) for the user.

2. Method according to Claim 1,
- wherein for the purpose of acquiring the first information (IDFG), the user photographs a code, in particular a one-dimensional barcode or two-dimensional quick response code, using the portable communications device (KG),
- wherein the portable communications device (KG) decodes the code,
- wherein the portable communications device (KG) sends the first information (IDFG) to the system (S) by means of an SMS message via a telecommunications service,
- and wherein the system (S) is a server.

3. Method according to Claim 1 or 2,
- wherein the system (S) assigns a first password (PW1) to a combination (KOMB) of the first information (IDFG) and the second information (IDKG) according to a fixed rule,
- wherein the system (S) defines the first password (PW1) as the first piece of access information (ZI1) on the basis of the combination (KOMB),
- wherein the field device (FG) assigns a second password (PW2) to the combination (KOMB) likewise according to the fixed rule,
- wherein the field device (FG) defines the second password (PW2) as the second piece of access information (ZI2) on the basis of the combination (KOMB).

4. Method according to Claim 1 or 2,
- wherein the system (S) and the field device (FG) are provided with a shared secret (G),
- wherein the portable communications device (KG) sends a date (D) in addition to the first information (IDFG) and the second information (IDKG) to the system (S),
- wherein the system (S) uses the shared secret (G) to calculate from the first information (IDFG), the second information (IDKG) and the date (D), a first one-off password (TAN1) as the first piece of access information (ZI1),
- wherein the field device (FG) uses the shared secret (G) to calculate, from the second information (IDKG) and the date (D) and from the first information (IDFG) known to the field device, a second one-off password (TAN2) as the second piece of access information (ZI2).

5. Method according to Claim 1 or 2,
- wherein the system (S) is provided with a first secret (G1) and a second secret (G2),
- wherein the field device (FG) is provided with the second secret (G2),
- wherein the portable communications device (KG) sends a date (D) in addition to the first information (IDFG) and the second information (IDKG) to the system (S),
- wherein the system (S) assigns a first password (PW1) to the second information (IDKG) according to a fixed rule,
- wherein the system (S) uses the first secret (G1) to calculate an interim password (PWINT) on the basis of the first information (IDFG), the second information (IDKG) and the first password (PW1),
- wherein the system (S) uses the second secret (G2) to calculate, from the interim password (PWINT) and the date (D), a first session-specific one-off password (TANSE1) as the first piece of access information (ZI1),
- wherein the field device (FG) determines the interim password (PWINT) from the second information (IDKG), where the field device (FG) has no knowledge of the first password (PW1) and also cannot determine this first password,
- wherein the field device (FG) uses the second secret (G2) to calculate, from the interim password (PWINT) and the date (D), a second session-specific one-off password (TANSE2) as the second piece of access information (ZI2).

6. Method according to any of the previous claims,
wherein the second information (IDKG) is in the form of a telephone number of the user, to which telephone number the system (S) assigns a role.

7. Method according to any of Claims 1 to 6,
wherein the second information (IDKG) includes a specification of a role of the user.

8. Method according to any of the previous claims, wherein the second information (IDKG) and/or the first piece of access information (ZI1) and/or a date (D) for transmitting from the portable communications device (KG) to the field device (FG) are entered on an input area of the field device (FG).

9. Method according to any of Claims 1 to 7,
wherein the second information (IDKG) and/or the first piece of access information (ZI1) and/or a date (D) are transmitted via wireless interfaces from the portable communications device (KG) to the field device (FG).

10. Access control system for authorizing a user at a field device (FG) by means of a portable communications device (KG), comprising:
- the portable communications device (KG) for acquiring first information (IDFG), for sending the first information (IDFG) and sending second information (IDKG) to a computer platform, and for sending the second information (IDKG) and a first piece of access information (ZI1) to the field device (FG);
- a computer platform having server functionality for receiving the first information (IDFG) and the second information (IDKG), for determining the first piece of access information (ZI1) on the basis of the first information (IDFG) and the second information (IDKG), and for sending the first piece of access information (ZI1) to the portable communications device (KG);
- field device (FG) for determining a second piece of access information (ZI2) on the basis of the second information (IDKG), and for allowing access to the field device (FG) for the user on the basis of a comparison of the first piece of access information (ZI1) and the second piece of access information (ZI2).

## Revendications

1. Procédé d'autorisation d'un usager par un appareil de communication portable (KG) au niveau d'un appareil de terrain (FG), comportant les étapes suivantes :
- saisie de premières informations (IDFG) pour l'identification de l'appareil de terrain (FG) par l'appareil de communication portable (KG) ;
- envoi des premières informations (IDFG) et de deuxièmes informations (IDKG) pour l'identification de l'appareil de communication portable et/ou de son usager, de l'appareil de communication portable (KG) à un système (S) ;
- détermination d'une première information d'accès (ZI1) en fonction des premières informations (IDFG) et des deuxièmes informations (IDKG) par le système (S) et envoi de la première information d'accès (ZI1) du système (S) à l'appareil de communication portable (KG) ;
- transmission des deuxièmes informations (IDKG) et de la première information d'accès (ZI1) de l'appareil de communication portable (KG) à l'appareil de terrain (FG) ;
- détermination d'une deuxième information d'accès (ZI2) en fonction des deuxièmes informations (IDKG) par l'appareil de terrain (FG) et comparaison de la première information d'accès (ZI1) avec la deuxième information d'accès (ZI2) ;
- octroi d'un accès à l'appareil de terrain (FG) pour l'usager, si la première information d'accès (ZI1) et la deuxième information d'accès (ZI2) coïncident.

2. Procédé selon la revendication 1,
- l'usager, pour saisir les premières informations (IDFG), photographiant un code, et plus particulièrement un code-barres unidimensionnel ou un code Quick Response bidimensionnel avec l'appareil de communication portable (KG),
- l'appareil de communication portable (KG) décodant le code,
- l'appareil de communication portable (KG) envoyant les premières informations (IDFG) au système (S) au moyen d'un message court via un service de communication
- et le système (S) étant un serveur.

3. Procédé selon la revendication 1 ou 2,
- le système (S) affectant un premier mot de passe (PW1) selon une règle fixe à une combinaison (KOMB) des premières informations (IDFG) et des deuxièmes informations (IDKG),
- le système (S) fixant le premier mot de passe (PW1) en tant que première information d'accès (ZI1) en fonction de la combinaison (KOMB),
- l'appareil de terrain (FG) affectant, également selon la règle fixe, un deuxième mot de passe (PW2) à la combinaison (KOMB),
- l'appareil de terrain (FG) fixant le deuxième mot de passe (PW2) en tant que deuxième information d'accès (ZI2) en fonction de la combinaison (KOMB).

4. Procédé selon la revendication 1 ou 2,
- un secret commun (G) étant imposé au système (S) et à l'appareil de terrain (FG),
- l'appareil de communication portable (KG) envoyant au système (S) une donnée (D) en plus des premières informations (IDFG) et des deuxièmes informations (IDKG),
- le système (S) calculant, à l'aide du secret commun (G), à partir des premières informations (IDFG), des deuxièmes informations (IDKG) et de la donnée (D), un premier mot de passe à usage unique (TAN1) en tant que première information d'accès (ZI1),
- l'appareil de terrain (FG) calculant, à l'aide du secret commun (G), à partir des deuxièmes informations (IDKG) et de la donnée (D) ainsi que des premières informations (IDFG) connues de l'appareil de terrain, un deuxième mot de passe à usage unique (TAN2) en tant que deuxième information d'accès (ZI2).

5. Procédé selon la revendication 1 ou 2,
- un premier secret (G1) et un deuxième secret (G2) étant imposés au système (S),
- le deuxième secret (G2) étant imposé à l'appareil de terrain (FG),
- l'appareil de communication portable (KG) envoyant au système (S) une donnée (D) en plus des premières informations (IDFG) et des deuxièmes informations (IDKG),
- le système (S) affectant un premier mot de passe (PW1) selon une règle fixe aux deuxièmes informations (IDKG),
- le système (S) calculant, à l'aide du premier secret (G1), un mot de passe intermédiaire (PWINT) en fonction des premières informations (IDFG), des deuxièmes informations (IDKG) et du premier mot de passe (PW1),
- le système (S) calculant, à l'aide du deuxième secret (G2), à partir du mot de passe intermédiaire (PWINT) et de la donnée (D), un premier mot de passe à usage unique spécifique à une session (TANSE1) en tant que première information d'accès (ZI1),
- l'appareil de terrain (FG) déterminant le mot de passe intermédiaire (PWINT) à l'aide des deuxièmes informations (IDKG), l'appareil de terrain (FG) n'ayant pas connaissance du premier mot de passe (PW1) et ne pouvant pas non plus le déterminer,
- l'appareil de terrain (FG) calculant, à l'aide du deuxième secret (G2), à partir du mot de passe intermédiaire (PWINT) et de la donnée (D), un deuxième mot de passe à usage unique spécifique à une session (TANSE2) en tant que deuxième information d'accès (ZI2).

6. Procédé selon l'une des revendications précédentes, les deuxièmes informations (IDKG) se présentant en tant que numéro de téléphone de l'usager auquel le système (S) affecte un rôle.

7. Procédé selon l'une des revendications 1 à 6, les deuxièmes informations (IDKG) incluant une mention du rôle de l'usager.

8. Procédé selon l'une des revendications précédentes, les deuxièmes informations (IDKG) et/ou la première information d'accès (ZI1) et/ou une donnée (D) étant saisies sur une surface de saisie de l'appareil de terrain (FG) pour transmission de l'appareil de communication portable (KG) à l'appareil de terrain (FG).

9. Procédé selon l'une des revendications 1 à 7, les deuxièmes informations (IDKG) et/ou la première information d'accès (ZI1) et/ou une donnée (D) étant transmises via des interfaces sans fil de l'appareil de communication portable (KG) vers l'appareil de terrain (FG).

10. Système de contrôle d'accès pour l'autorisation d'un usager par un appareil de communication portable (KG) au niveau d'un appareil de terrain (FG), comprenant :
- l'appareil de communication portable (KG) pour la saisie de premières informations (IDFG), pour l'envoi des premières informations (IDFG) et de deuxièmes informations (IDKG) à une plate-forme de calcul et pour l'envoi des deuxièmes informations (IDKG) et d'une première information d'accès (ZI1) à l'appareil de terrain (FG) ;
- une plate-forme de calcul avec fonctionnalité de serveur pour recevoir les premières informations (IDFG) et les deuxièmes informations (IDKG), pour déterminer la première information d'accès (ZI1) en fonction des premières informations (IDFG) et des deuxièmes informations (IDKG) et pour envoyer la première information d'accès (ZI1) à l'appareil de communication portable (KG) ;
- appareil de terrain (FG) pour déterminer une deuxième information d'accès (ZI2) en fonction des deuxièmes informations (IDKG) et pour octroyer un accès de l'usager à l'appareil de terrain (FG) en fonction d'une comparaison de la première information d'accès (ZI1) et de la deuxième information d'accès (ZI2).
